# EUROPEAN PATENT SPECIFICATION

(11) **EP 0 946 039 B1**
(45) Date of publication and mention of the grant of the patent: **19.06.2002**
(21) Application number: 99106323.1
(22) Date of filing: 26.03.1999
(51) Int. Cl.: H04N 1/00

(54) **Image recognition unit for preventing counterfeit copies**
Bilderkennungseinheit zur Verhinderung von Fälschungen
Appareil de reconnaissance d'images pour éviter la contrefacon

(30) Priority: 26.03.1998 JP 7902498
(43) Date of publication of application: 29.09.1999
(73) Proprietor: OMRON CORPORATION, Kyoto-shi, Kyoto 616 (JP)
(72) Inventor: Taniguchi, Keitaro, Kyoto 616 (JP); Kakiuchi, Takashi, Kyoto 616 (JP)
(74) Representative: Kahler, Kurt, Dipl.-Ing.

(56) References cited:
- EP-A- 0 522 769
- EP-A- 0 617 545
- EP-A- 0 751 663
- EP-A- 0 779 603

## Description

This invention concerns an image recognition unit to prevent counterfeiting of banknotes, stock certificates or other documents which may not be legally reproduced.

As the resolution and tonal processing capability of image generator devices such as copiers and printers has become increasingly sophisticated, the quality of the print image has continued to improve. The outstanding resolution which color image generators are now capable of has led the industry to focus on the potential for counterfeiting banknotes and stock certificates. A demand has therefore arisen for anti-counterfeiting units which can be installed in color image generators to prevent this crime from occurring.

A first method used by anti-counterfeiting units which are installed in color image generators entails placing a specific pattern which is difficult to discern with the naked eye on the original documents at the time they are printed. A specific device can then use a specific process to extract the pattern in order to determine which anti-counterfeiting unit produced the image.

A second method is to use an image generator with an image recognition unit as described in U.S. patent US-A-6091844. Using the image data needed to generate the image, this unit determines whether the image being generated is a banknote, stock certificate or other document which may not be reproduced. The image recognition unit uses the image data comprising the bit image in the control unit of the image generator to recognize a banknote, stock certificate or other proscribed document and sends a signal to die image generator to prevent printing once it recognizes the counterfeit image.

The first anti-counterfeiting method mentioned above is not a particularly effective way to prevent counterfeiting. This is because the counterfeit banknote or stock certificate is already created and the creator of such an illegal copy can intentionally use the copy as an original although it has a specific pattern that identifies it as a counterfeit copy. In the other words, the tracing of counterfeit bills or certificates produced in this way can begin only after they are used.

In the second method mentioned above, because at least three types of color component data are needed to generate a color image, the image recognition unit must be able to correctly identify the color component data in order to recognize a bank note or stock certificate. To insure this capability, the control unit of the image generator must have a very complex design, and, as a result, it is unable to easily extract the signals needed to recognize the image. This makes the image recognition unit less flexible and difficult to install at the same circuit position in different types of image processing devices.

In EP-A-0 522 769, an image recognition device is disclosed which recognizes a specific image, which may not be printed, by using only tonal data converted from binary data. Since the image processing apparatus of EP-A-0 522 769 does not recognize the pattern shape of the specific image, a recognition error may be caused. If an image example to be printed includes a colour tone very similar to the specific image but not a similar shape, there is a possibility that the image example will be recognized as the specific image by the image processing apparatus.

In EP-A-0 751 633, image processing without converting from binary data to tonal density data is disclosed. The pattern shape of the specific image is recognized, using binary data converted from multi-valued data by a preprocessor (16).

The present invention was developed in consideration of the difficulties outlined above. An object of the invention is to provide an image recognition unit for preventing counterfeit copies which can easily be installed in a variety of image 30 processing devices or generators and which is capable of highly accurate recognition. The object of the invention is solved by a device according to claim 1 in which a image recognition unit according can be installed between the existing control unit of the image generator device and the print engine unit of the same device where the binary signals for the each color component are produced transmitted to a laser light source for reproduction of an image. The light from laser light source creates a latent image on photosensitive substance for copying.

This image recognition unit has an image recognition device to recognize a specific illegal image, which is specifically provided between the control unit of the image generator device and the print engine unit of the same device, and a preventing device to prevent printing the illegal image, which executes an operation to prohibit printing when the image recognition device has recognized a counterfeit image which may not be printed.

The aforesaid image recognition device recognizes a specific illegal image which may not be printed using at least one type of the binary color component pattern data needed to generate a color image.

The image recognition device is be provided with a converting device to convert the binary pattern data to tonal data, which are then used to recognize the image.

In some types of image generators, each dot in the pattern data for tonal reproduction is divided into a number of segments, for example 4 segments, in order to smooth the edges of an image. In this case, the image recognition device counts the number of black segments, and the count can represent the tonal data. These tonal data are then used to recognize the image.

Another embodiment of an image recognition device counts the number of black segments in a square or cross-shaped region formed by several dots, and the count can represent the tonal data. These tonal data arc then used to recognize the image.

In another embodiment, the image recognition device treats these black segment data as a hexadecimal number and compares this value with the numerical value obtained by interchanging its upper and lower bits. The smaller of the two numerical values is then considered as the tonal data. These converted tonal data would then be used to recognize the image.

In another embodiment, the image recognition device treats these black segment data as a hexadecimal number and compares this value with the numerical value obtained by interchanging the upper and lower bits. The smaller hexadecimal values existing in a square or cross-shaped region formed by several dots are then summed up for the converted tonal data. These converted tonal data would then be used to recognize the image.

The image recognition device may also have storage unit to store the data representing a feature count obtained from converted tonal data, and recognize the illegal specific image by comparing a plurality of the converted tonal data of every color component.
Figure 1 is a block diagram of the internal configuration of the image recognition unit according to this invention.
Figure 2 illustrates an image recognition device in the image recognition unit of Fig. 1, which stores a feature set in the storage unit.
Figure 3 illustrates a method to store a feature count in the storage unit of the same image recognition unit.
Figure 4 illustrates another method to store a feature count in the storage unit of the same image recognition unit.
Figure 5 illustrates yet another method to store a feature count in the storage unit of the same image recognition unit.
Figure 6 illustrates yet another method to store a feature count in the storage unit of the same image recognition unit.
Figure 7 shows an example of multi-valued image obtained by executing tonal reproduction on the color pattern data obtained by the image recognition unit.
Figure 8 illustrates one method to convert a binary image to a multi-valued image according to a preferred embodiment of an image recognition unit.
Figure 9 illustrates another method to convert a binary image to a multi-valued image according to another preferred embodiment of an image recognition unit.
Figure 10 illustrates yet another method to convert a binary image to a multi-valued image according to another preferred embodiment of an image recognition unit.
Figure 11 illustrates yet another method to convert a binary image to a multi-valued image according to another preferred embodiment of an image recognition unit.
Figure 12 illustrates yet another method to convert a binary image to a multi-valued image according to another preferred embodiment of an image recognition unit.
Figure 13 is a block diagram of the basic configuration of a prior art generic image generator device.
Figure 14 is an example of a print image printed by a prior art image generator device.
Figure 15 is an example of a dot matrix print data of a prior art image generator device.
Figure 16 is another example of a dot matrix print data of a prior art image generator device.

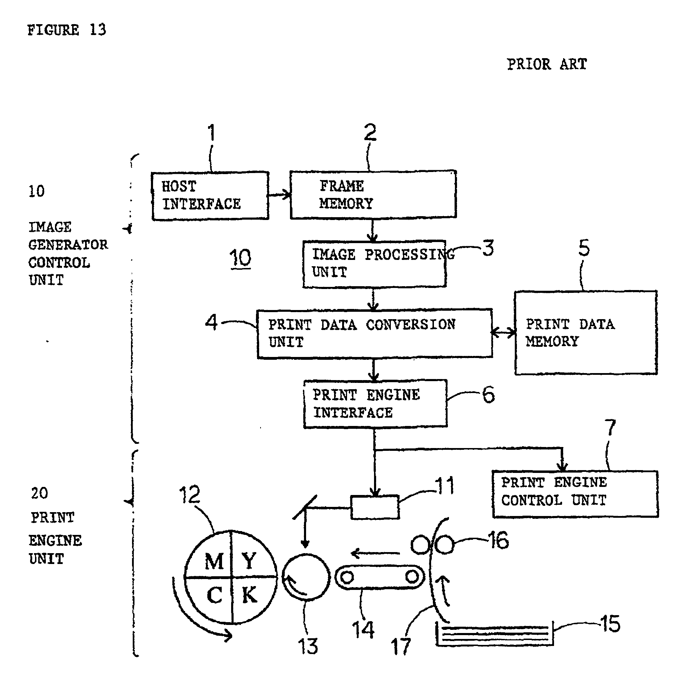

Figure 13 is a block diagram showing the basic structure of a generic image generator device according to the prior art. The components from host interface 1 through print engine interface 6 constitute image generator control unit 10. Image data which are input via host interface 1 are stored in frame memory 2. This memory can store enough data to represent the image on a single sheet of paper. The image data stored in frame memory 2 have their color adjusted by image processing unit 3. They are converted to a print data in print data conversion unit 4 and stored in print data memory 5.

The components from print engine control unit 7 through paper tray 15 constitute print engine unit 20. The print data from print engine interface 6 consists of ON and OFF signals for lascr light source 11. The light from laser light source 11 creates a latent image on photosensitive substance 13. When toner is supplied from toner cartridge 12, an actual image is created on photosensitive substance 13. This toner, organized into an image, is transferred to intermediate transfer substance 14. When this process is repeated for each process color (yellow, magenta, cyan and black), a full-color image is generated on intermediate transfer substance 14. The image on transfer substance 14 is transferred to paper 17, which is supplied from paper tray 15. The toner is fixed onto paper 17 by fixer 16.

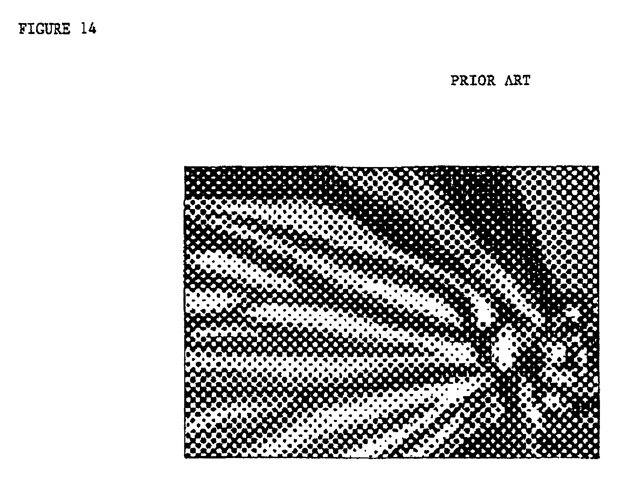

Generally, the print data from print engine interface 6 will be a dot matrix, an example of which is shown in Figure 14. Such a matrix reproduces concentrated dark areas by means of a systematic arrangement of black dots of various sizes. For actual color images, additional dot matrices of yellow, magenta and cyan are overlaid to reproduce tone and concentration.

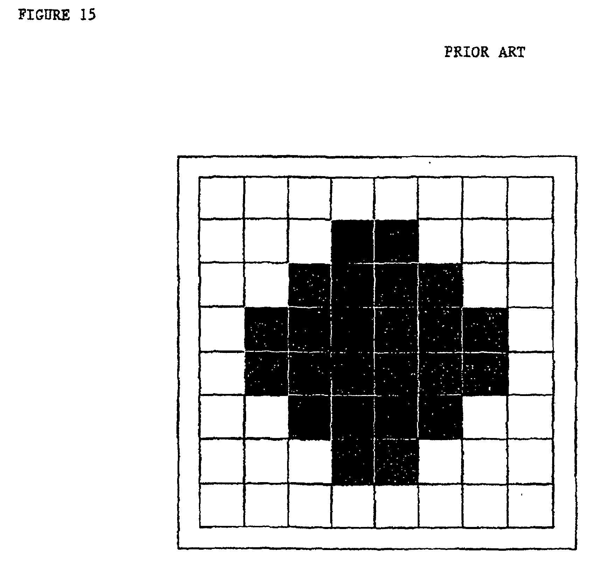

Figure 15 shows an example of print data constituting a dot matrix. By switching laser light source 11 on and off, the print engine unit 20 creates a latent image of the dot matrix on photosensitive substance 13. The size of the area which receives or does not receive the laser light when light source 11 is switched on and off is predetermined according to the type of the image generator. The minimum size hit by laser light is called a "dot". A square area consisting of several to several dozen dots is called a "square". A single dot matrix is formed in a square of a given size. For example, as can be seen in Figure 15, dots created by switching laser light source 11 on and off are arranged to form a black circle in the center of the square. When the square in which this dot matrix is created is replicated systematically over the entire print area, the printing by this image generator is completed. If, as is shown in Figure 15, a dot matrix is formed in a region consisting of 8 dots × 8 dots, it will be capable of 65-tonal density reproduction.

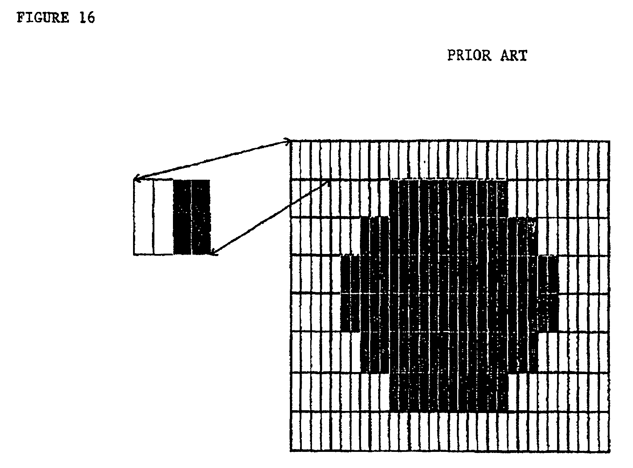

Figure 16 shows another example of print data which generates a dot matrix. When a dot matrix is created in a square area consisting of several to several dozen dots by switching laser light source 11 on and off in units of a single dot, the size of the dot matrix which is reproduced, that is, its tonal density reproducibility, will be still low. This is because the quality of the image, for example as shown by how smooth the curve of the circumference of the circle is, will still be poor. To insure the highest quality possible, the laser light source 11 can be operated with even finer on-off control in the scanning direction. By subdividing a single dot into even smaller regions, we can mitigate the problem of rough or jagged edges. If, for example, we use the same 8 x 8 square as in Figure 15, but create a finer matrix by segmenting each dot into 4 regions as shown in Figure 16, our matrix will be capable of reproducing 257 tonal density, and the edges of forms will appear smoother.

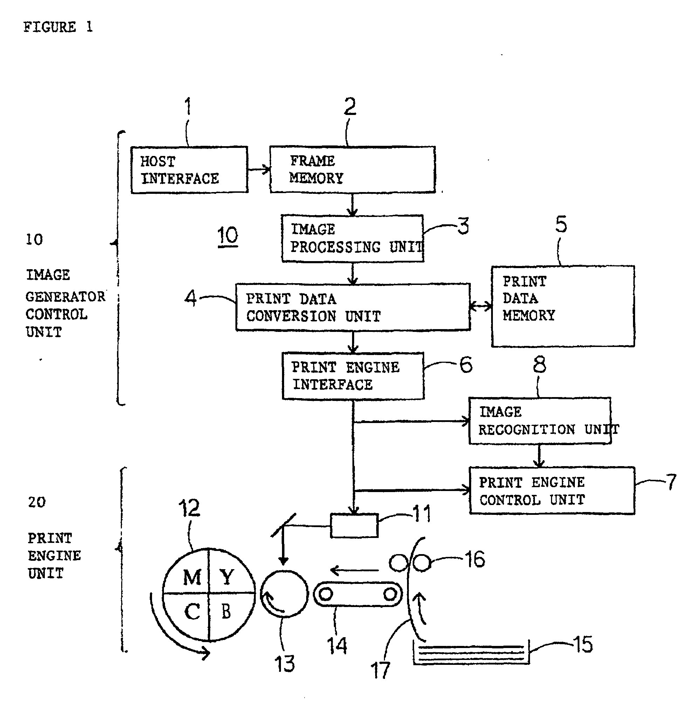

Figure 1 is a block diagram of an image generator device according to a preferred embodiment of the invention. In the embodiment shown in Figure 1, an image recognition unit 8 is placed between the print engine interface 6 of the image generator control unit 10 and print engine control unit 7 of the print engine unit 20.

In the image generator device of Fig. 1, the print data from the image generator control unit 10 are sent in parallel to laser light source 11 and to image recognition unit 8. Using these data, image recognition unit 8 executes image recognition and determines whether the image to be copied is a banknote, stock certificate or other document which may not be reproduced. It sends the result of this determination to print engine control unit 7. In this embodiment, it is important that the print data representing a copy image from print engine interface 6 to laser light source 11 generally is expressed by only two values (binary value), which represents switching light source 11 on or off. In some types of image generators, multi-value data (for example, hexadecimal data) may be used to express the print data. The multi-value data is, however, used to express the ON/OFF signal for a group of some dots or some segments in a single dot which defines the tonal density reproduction. These print data are generally output along with other control data, such as an output start signal, a horizontal cycle signal, a vertical cycle signal or a cycle clock signal. Since the various types of image generator devices all have virtually the same specifications, and the print engine interface 6 outputs the print data along with the same kind of control data, it is therefore relatively simple to install image recognition unit 8 between the print engine interface 6 and print engine control 7. Image recognition unit 8 according to this invention will, therefore, be able to receive the print data from print engine interface of many types of image generator devices.

The print data which print engine interface 6 of the image generator device outputs to laser light source 11 are binary data. The image generator device outputs these print data for every color component needed to reproduce the color image.

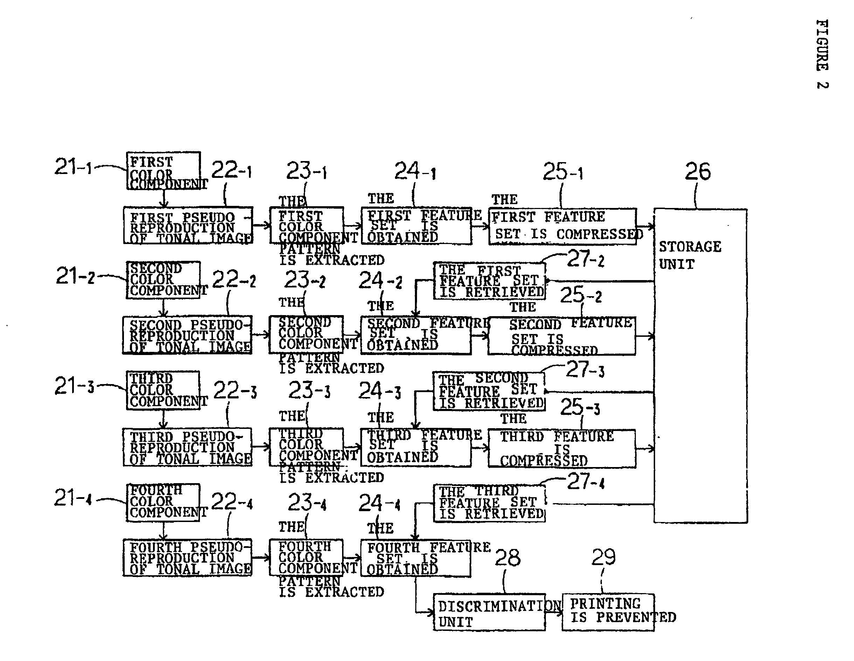

First, as can be seen in Figure 2, the pscudo-reproduction of tonal image (22₁) is formed using the print data of the first color component 21₋₁. At this point, the first color component pattern is extracted (23₋₁) from the pseudo-reproduced tonal image which is defined by multi-value color data. This extraction of the first color component pattern is executed using a number of previously established threshold values defined by a multi-value color data. A feature set representing the shape is then obtained (24₁). The obtained feature set data representing the shape of the first color component pattern is then compressed (25₋₁), and stored temporarily in storage unit 26. The form of the feature set to be stored can be defined by a number of available schemes, which will be discussed shortly.

The print data for the second color component (21₋₂) are then reproduced (22₋₂) in the same fashion, and a feature count representing the shape of the second color component pattern is obtained (24₋₂). The data for the feature set obtained for the second color component pattern is not, however, stored in its raw form. Instead, the feature set obtained from the first color is retrieved (27₋₂) to compare to the feature set of the second color component pattern. The revised feature set is then obtained and compressed (25₋₂), and it is stored in storage unit 26.

In the same way, the feature set obtained from the print data for the third and fourth color components are compared to the stored feature set to produce the revised feature set.

The feature set obtained from the print data for all color components is then input into discrimination unit 28 to discriminate the image of a bank note or stock certificate from an image to be checked.

The feature set obtained here is the result of a comparison between the shapes obtained from the print data of at least 2 color components, so it includes the feature set of color phase, saturation and brightness. And since a feature set for the shape is obtained from the print data for a number of color components and compared with the previous feature set each time, an extremely accurate feature set can be obtained.

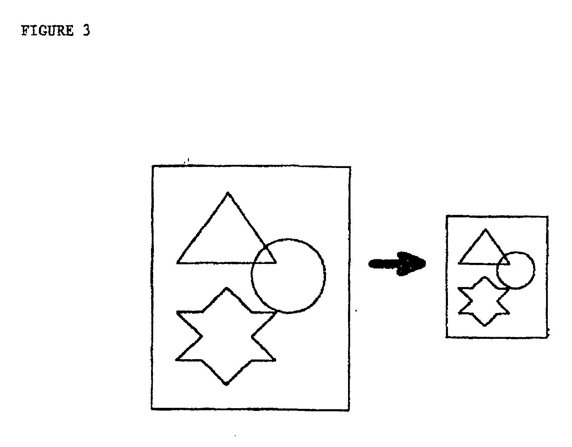

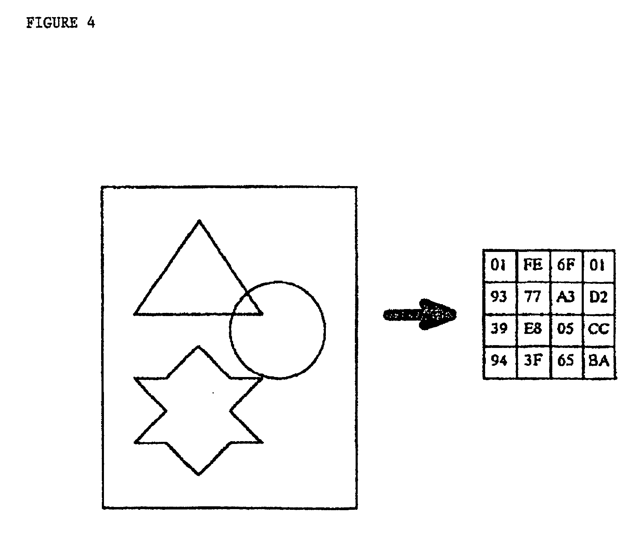

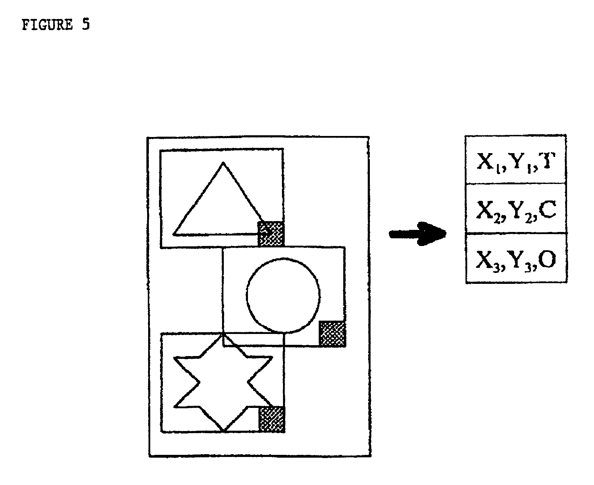

We will now explain the form of the feature set mentioned above. An example of how a feature set may be stored in storage unit 26 is shown in Figure 3. In this first example, the obtained entire image of the feature set is reduced and stored in the storage unit 26. In a second example, shown in Figure 4, the obtained entire print image is encoded and compressed before it is stored in the storage unit 26. A third example is shown in Figure 5. Here the feature set data are stored in the storage unit along with data indicating the locations of the obtained print images. In this case several square regions of a given size within the image are scanned. If the feature sets are found in these regions, the leftmost point on the tops of the regions are defined as an origin of the coordinate axes, and the coordinate of the lower right corners are stored as their ends. At the same time, the feature sets for the shapes are encoded, and stored in the storage unit.

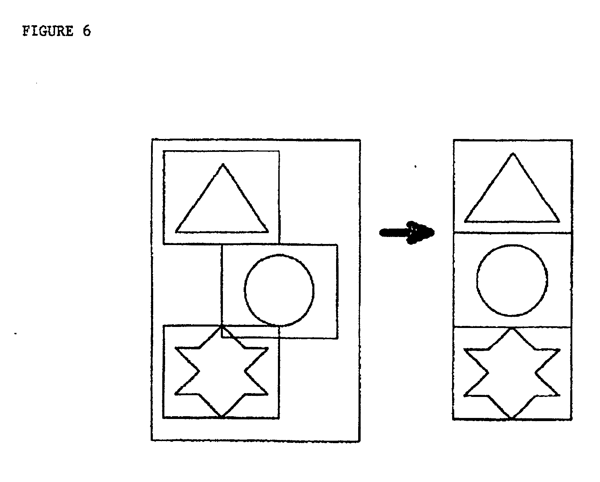

Additionally, another example is shown in Figure 6. The print images in a region having a predetermined size which includes the obtained feature set are stored in the storage unit. The region is defined as to include the entirety of the feature set. In this case, a color component pattern is scanned by a square region of a given size. If a shape to be recognized which has a feature set for shape is found in the scanning region, the shape images in the region are stored in the storage unit.

We shall next explain several schemes which can be used in the image recognition unit according to the present inventions to convert a binary pattern data to a multi-valued pattern data:

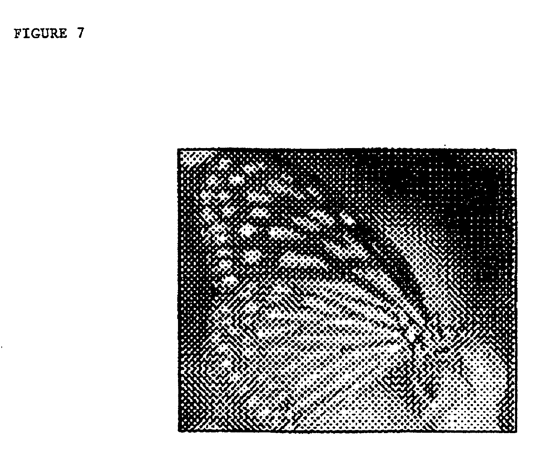

Figure 7 is an example image which is formed by converting the binary pattern data to multi-valued pattern data by counting the black dots in each 8 × 8 dot region.

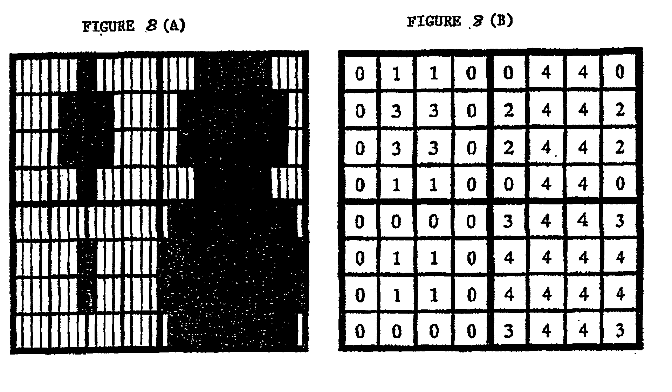

Another scheme can be used when each dot in the pattern data for tonal reproduction is divided into a number of segments. The number of black segments in a dot is divided into, for example, N segments. In the example shown in Figure 8 (a), the number of the black segments out of 4 segments is counted, and the tone density of each dot can be expressed as one of five values from 0 through 4, as is shown in Figure 8 (b).

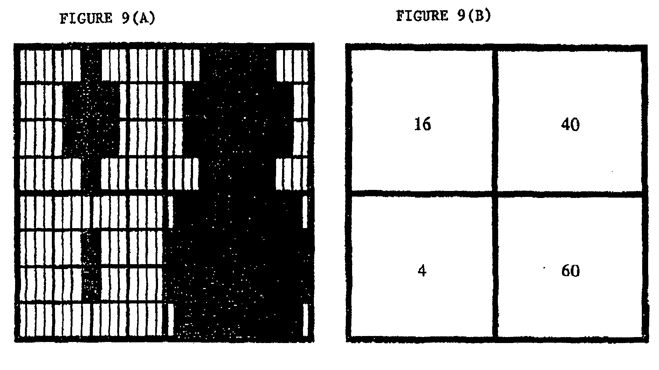

Another scheme to convert binary pattern data to a multi-valued pattern data is shown in Figure 9. Each dot in the pattern data for tonal density reproduction is divided into a number of segments, and the total number of black dots in a region measuring N x N dots represents the tonal density value. In this case, if one segment of a dot is black, the value of that dot will be 1. In the example shown in Figure 9 (a), for example, the tone density will be reproduced using 4 × 4 dot regions in which each dot has been divided into four segments. A single dot will can have a value between 0 and 4. When these values are compiled for a 16-dot region, they express one of 65 possible tones, as is shown in Figure 9 (b).

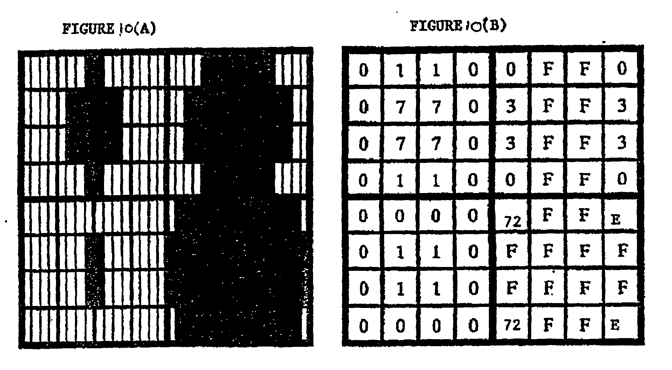

Yet another conversion scheme to convert a binary pattern data to a multi-valued pattern data is shown in Figure 10. The each dot in the pattern data for tonal density reproduction is divided into a number of segments, and the black segments in a dot represent a hexadecimal number tonal density value. The hexadecimal number obtained in this way is compared with die number obtained by interchanging its upper and lower bits, and the smaller of the two numbers is used as the tonal density value of the dot. In the example shown in Figure 10 (a), for example, tone density is reproduced from data obtained by dividing each dot into four segments, and when the black segments of each dot are counted, its black segments can be expressed as one of sixteen tones from 0 through F, as is shown in Figure 10 (b).

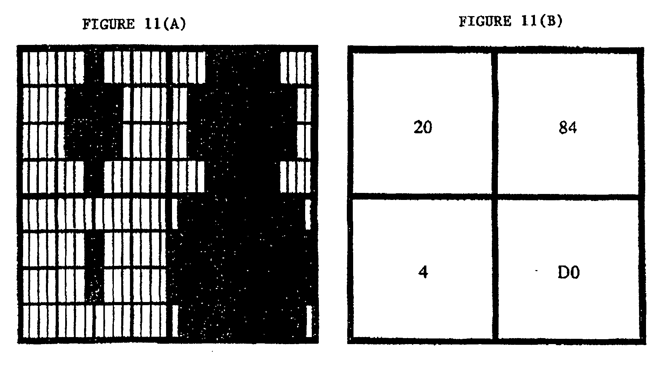

Yet another conversion scheme to convert a binary pattern data to a multi-valued pattern data is shown in Figure 11. The each dot in the pattern data for tonal reproduction is divided into a number of segments, and the black segments in a dot represent a hexadecimal number tonal density value. The hexadecimal numbers obtained in this way which are in a region of M x M dots are summed up. Before summing up, the hexadecimal number is compared with the number obtained by interchanging its upper and lower bits, and the smaller of the two numbers is used as the tonal density value of the dot. In the example shown in Figure 11(a), for example, tone is reproduced from data obtained by dividing each dot into four segments, and when every hexadecimal numbers of 16 dots are summed up, and the total number of these hexadecimal numbers can be expressed as one of 256 tones, as is shown in Figure 11 (b).

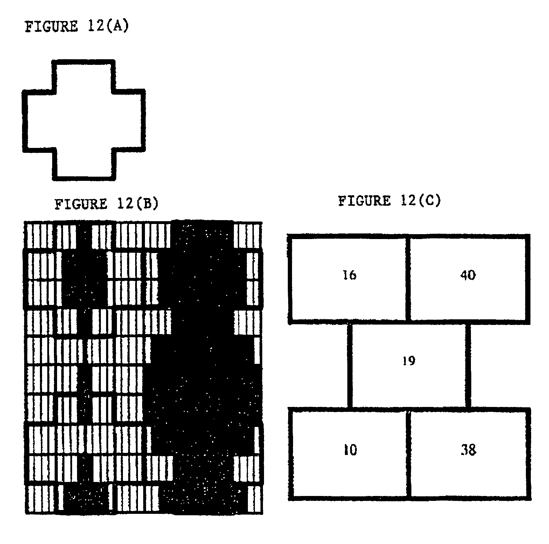

Yet another conversion scheme to convert a binary pattern data to a multi-valued pattern data is shown in Figure 12. The each dot in the pattern data for tonal density reproduction is divided into a number of segments, and the number of black segments in the cross-shaped region shown in Figure 12 (a) represents the tonal density value. Here, again, a single black segment in a dot gives it a tonal value of 1. Tone is reproduced using the cross-shaped region in each 4 × 4 dot area, with each dot divided into four segments, as shown in Figure 12 (b). A given dot will have a value from 0 thorough 4. When the values of all the dots in a 12-dots region of the cross-shaped region are summed up together, their sum will express one of 49 possible tone densities, as is shown in Figure 12 (c).

According to this invention, an image recognition device is provided between the control unit of the image generator device and the print engine unit of the same device to obtained the print data which are expressed in binary data form. When this image recognition unit recognizes an image which may not legally be printed, a preventing operation is executed to prevent the printing. Because the image recognition unit obtains a feature count from every color component of an image based on the print data of each color component, its accuracy with respect to recognition is extremely high. Since the print data for all color components which are expressed in binary data form are easy to obtain from any type of image generator device and the binary data form is relatively similar from machine to machine, a universal-type interface can be used to input data into the image recognition unit.

## Claims

1. An image processing device for prohibiting the reproduction of specific image, the device comprising:
an image recognition device (8) connectable to a reproduction engine of an image reproduction device for recognizing a specific image for which reproduction is prohibited based on binary data supplied to the reproduction engine; and
a preventing device connected to the image recognition device (8) and connectable to the reproduction engine to prevent the reproduction engine from reproducing a specific image recognized by the image recognition device (8), said image recognition device (8) being configured so as to recognize a specific shape pattern based on binary data of at least one colour component forming said specific image, **characterized in that** said image recognition device (8) comprises a converting device to convert said binary data to tonal density data which is expressed by multi-valued data, and said converted tonal density data is used to recognize said specific image.

2. A device according to claim 1, wherein an image dot forming said specific image is divided into a plurality of segments, and said converting device counts a number of segments to be hit by a laser beam from a laser source (11) in the reproduction device in order to convert said binary data to said tonal density data.

3. A device according to claim 2, wherein said converting device counts a number of segments in a square region formed by several dots.

4. A device according to claim 2, wherein said converting device counts a number of segments in a cross-shaped region formed by several dots.

5. A device according to claim 2, wherein said converting device converts said binary data to said tonal density data by obtaining first multi-value data from an original arrangement of said plurality of segments;
obtaining second multi-value data from said plurality of segments by interchanging an upper and a lower bit part of the first multi-value data;
comparing said first and second multi-value data; and
providing the smaller of the first and second multi-value data as a tonal density value.

6. A device according to claim 5, wherein
said converting device sums up a plurality of said tonal density values in a square region formed by several dots in order to convert said binary data to said tonal density data.

7. A device according to claim 5, wherein
said converting device sums up a plurality of said tonal density values in a cross-shaped region formed by several dots in order to convert said binary data to said tonal density data.

8. A device according to claim 1, wherein said converting device converts a plurality of said colour component data forming said specific image into a plurality of said tonal density data and stores said tonal density data in a storage unit (26), and wherein a discrimination unit (28) discriminates said binary data based on said plurality of said tonal density data if said binary data has said specific pattern.

9. A device according to claim 8, wherein
a tonal density data of a colour component data is compared with a previously obtained tonal density data of other colour component data successively, and a result of said comparison is stored in said storage unit (26) for use in recognizing said specific pattern.

## Patentansprüche

1. Bildverarbeitungsvorrichtung zum Verbieten der Reproduktion eines speziellen Bildes, wobei die Vorrichtung umfaßt:
eine Bilderkennungsvorrichtung (8), die mit einem Reproduktionsprozessor einer Bildreproduktionsvorrichtung verbindbar ist, zum Erkennen eines speziellen Bildes, für das die Reproduktion verboten ist, auf der Basis von Binärdaten, die zum Reproduktionsprozessor geliefert werden; und
eine Verhinderungsvorrichtung, die mit der Bilderkennungsvorrichtung (8) verbunden ist und mit dem Reproduktionsprozessor verbindbar ist, um zu verhindern, daß der Reproduktionsprozessor ein spezielles Bild reproduziert, das von der Bilderkennungsvorrichtung (8) erkannt wurde, wobei die Bilderkennungsvorrichtung (8) dazu ausgelegt ist, ein Muster mit spezieller Form auf der Basis von Binärdaten von mindestens einer Farbkomponente zu erkennen, welche das spezielle Bild bilden, **dadurch gekennzeichnet, daß** die Bilderkennungsvorrichtung (8) eine Umwandlungsvorrichtung zum Umwandeln der Binärdaten in Tönungsdichtedaten umfaßt, die durch mehrwertige Daten ausgedrückt werden, und die umgewandelten Tönungsdichtedaten zum Erkennen des speziellen Bildes verwendet werden.

2. Vorrichtung nach Anspruch 1, wobei ein Bildpunkt, der das spezielle Bild bildet, in eine Vielzahl von Segmenten unterteilt wird, und die Umwandlungsvorrichtung eine Anzahl von Segmenten, die von einem Lasterstrahl von einer Laserquelle (11) in der Reproduktionsvorrichtung getroffen werden sollen, zählt, um die Binärdaten in die Tönungsdichtedaten umzuwandeln.

3. Vorrichtung nach Anspruch 2, wobei die Umwandlungsvorrichtung eine Anzahl von Segmenten in einem quadratischen Bereich, der aus mehreren Punkten besteht, zählt.

4. Vorrichtung nach Anspruch 2, wobei die Umwandlungsvorrichtung eine Anzahl von Segmenten in einem kreuzförmigen Bereich, der aus mehreren Punkten besteht, zählt.

5. Vorrichtung nach Anspruch 2, wobei die Umwandlungsvorrichtung die Binärdaten in die Tönungsdichtedaten umwandelt durch Erhalten von ersten mehrwertigen Daten von einer ursprünglichen Anordnung der Vielzahl von Segmenten;
Erhalten von zweiten mehrwertigen Daten von der Vielzahl von Segmenten durch Vertauschen eines oberen und eines unteren Bitteils der ersten mehrwertigen Daten;
Vergleichen der ersten und der zweiten mehrwertigen Daten; und
Liefern der kleineren der ersten und der zweiten mehrwertigen Daten als Tönungsdichtewert.

6. Vorrichtung nach Anspruch 5, wobei
die Umwandlungsvorrichtung eine Vielzahl der Tönungsdichtewerte in einem quadratischen Bereich, der aus mehreren Punkten besteht, aufsummiert, um die Binärdaten in die Tönungsdichtedaten umzuwandeln.

7. Vorrichtung nach Anspruch 5, wobei
die Umwandlungsvorrichtung eine Vielzahl der Töndungsdichtewerte in einem kreuzförmigen Bereich, der aus mehreren Punkten besteht, aufsummiert, um die Binärdaten in die Töndungsdichtedaten umzuwandeln.

8. Vorrichtung nach Anspruch 1, wobei die Umwandlungsvorrichtung eine Vielzahl der Farbkomponentendaten, die das spezielle Bild bilden, in eine Vielzahl der Tönungsdichtedaten umwandelt und die Tönungsdichtedaten in einer Speichereinheit (26) speichert, und wobei eine Unterscheidungseinheit (28) die Binärdaten auf der Basis der Vielzahl der Tönungsdichtedaten unterscheidet, wenn die Binärdaten das spezielle Muster aufweisen.

9. Vorrichtung nach Anspruch 8, wobei
Tönungsdichtedaten von Farbkomponentendaten mit vorher erhaltenen Tönungsdichtedaten von anderen Farbkomponentendaten nacheinander verglichen werden, und ein Ergebnis des Vergleichs in der Speichereinheit (26) zur Verwendung beim Erkennen des speziellen Musters gespeichert wird.

## Revendications

1. Dispositif de traitement d'image destiné à interdire la reproduction d'une image spécifique, le dispositif comprenant :
un dispositif de reconnaissance d'image (8) pouvant être relié à un moteur de reproduction d'un dispositif de reproduction d'image destiné à reconnaître une image spécifique pour laquelle une reproduction est interdite sur la base de données binaires fournies au moteur de reproduction, et
un dispositif d'empêchement relié au dispositif de reconnaissance d'image (8) et pouvant être relié au moteur de reproduction afin d'empêcher le moteur de reproduction de reproduire une image spécifique reconnue par le dispositif de reconnaissance d'image (8), ledit dispositif de reconnaissance d'image (8) étant configuré de façon à reconnaître un motif de forme spécifique sur la base de données binaires d'au moins une composante de couleur formant ladite image spécifique, **caractérisé en ce que** ledit dispositif de reconnaissance d'image (8) comprend un dispositif de conversion afin de convertir lesdites données binaires en données de densité de tons qui sont exprimées par des données à valeurs multiples, et lesdites données de densité de tons converties sont utilisées pour reconnaître ladite image spécifique.

2. Dispositif selon la revendication 1, dans lequel un point d'image formant ladite image spécifique est divisé en une pluralité de segments, et ledit dispositif de conversion compte un certain nombre de segments devant être atteints par un faisceau laser provenant d'une source laser (11) dans le dispositif de reproduction de manière à convertir lesdites données binaires en dites données de densité de tons.

3. Dispositif selon la revendication 2, dans lequel ledit dispositif de conversion compte un nombre de segments dans une région carrée formée par plusieurs points.

4. Dispositif selon la revendication 2, dans lequel ledit dispositif de conversion compte un nombre de segments dans une région en forme de croix formée par plusieurs points.

5. Dispositif selon la revendication 2, dans lequel ledit dispositif de conversion convertit lesdites données binaires en dites données de densité de tons en obtenant des premières données à valeurs multiples à partir d'un agencement d'origine de ladite pluralité de segments,
en obtenant des secondes données à valeurs multiples à partir de ladite pluralité de segments en interchangeant une partie de bits supérieurs et une partie de bits inférieurs des premières données à valeurs multiples,
en comparant lesdites premières et secondes données à valeurs multiples, et
en fournissant les plus petites des premières et secondes données à valeurs multiples en tant que valeurs de densité de tons.

6. Dispositif selon la revendication 5, dans lequel
ledit dispositif de conversion additionne une pluralité desdites valeurs de densité de tons dans une région carrée formée par plusieurs points de manière à convertir lesdites données binaires en dites données de densité de tons.

7. Dispositif selon la revendication 5, dans lequel
ledit dispositif de conversion additionne une pluralité desdites valeurs de densité de tons dans une région en forme de croix formée par plusieurs points de manière à convertir lesdites données binaires en dites données de densité de tons.

8. Dispositif selon la revendication 1, dans lequel ledit dispositif de conversion convertit une pluralité desdites données de composantes de couleur formant ladite image spécifique en une pluralité de dites données de densité de tons et mémorise lesdites données de densité de tons dans une unité de mémorisation (26), et dans lequel une unité de discrimination (28) réalise une discrimination desdites données binaires sur la base de ladite pluralité desdites données de densité de tons si lesdites données binaires présentent ledit motif spécifique.

9. Dispositif selon la revendication 8, dans lequel
des données de densité de tons de données de composantes de couleur sont comparées successivement à des données de densité de tons obtenues précédemment d'autres données de composantes de couleur, et le résultat de ladite comparaison est mémorisé dans ladite unité de mémorisation (26) en vue d'une utilisation lors de la reconnaissance dudit motif spécifique.
